# EUROPÄISCHE PATENTSCHRIFT

(11) **EP 2 783 921 B1**
(45) Veröffentlichungstag und Bekanntmachung des Hinweises auf die Patenterteilung: **08.06.2016**
(21) Anmeldenummer: 14161127.7
(22) Anmeldetag: 21.03.2014
(51) Int. Cl.: B60R 16/023, B66F 9/075, B66F 9/24, B66F 17/00

(54) **Gehäuse für Fahrerassistenzsysteme und ein mit einem solchen ausgestattetes Flurförderzeug**
Housing for driver assistance systems and an industrial truck equipped with the same
Boîtier pour systèmes d'assistance du conducteur et chariot de manutention équipé d'un tel boîtier

(30) Priorität: 28.03.2013 DE 202013101369 U
(43) Veröffentlichungstag der Anmeldung: 01.10.2014
(73) Patentinhaber: Marinitsch, Waldemar, D-81675 München (DE)
(72) Erfinder: Marinitsch, Waldemar, D-81675 München (DE)
(74) Vertreter: Kotitschke, Ralf Thomas

(56) Entgegenhaltungen:
- DE-A1- 3 306 467
- DE-A1-102006 001 890
- DE-A1-102006 013 525
- DE-A1-102010 025 085
- DE-A1-102011 005 704
- DE-C1- 19 827 044

## Beschreibung

Fahrerassistenzsysteme (FAS-Systeme) für im Straßenverkehr zugelassene Kraftfahrzeuge unterstützen den Fahrer in bestimmten Gefahrensituationen. Diese elektronischen Zusatzeinrichtungen reagieren teilweise autonom, das heißt willensunabhängig vom Fahrzeuglenker. Beispiele hierfür sind ABS- und ESP-Systeme. Ein Großteil der FAS-Systeme ist jedoch so konzipiert, dass der Fahrzeuglenker den automatischen Eingriff der Systeme in die Fahrzeugsteuerung übersteuern kann. Ein Gehäuse für Fahrerassistenzsysteme ist aus der DE 19 827 044 C bekannt.

Auch im logistischen Bereich werden FAS-Systeme immer häufiger zur Gefahrenabwendung in Flurförderzeugen (z.B. Stapler, Regalbediengeräte, Elektrocars, Kehrmaschinen usw.) eingesetzt. Denn auch hier gibt es Situationen und Umstände, die bei Unachtsamkeit oder nicht rechtzeitiger Reaktion des Fahrzeuglenkers zu schlimmen Unfällen führen können, zum Beispiel wenn der Fahrzeuglenker zu spät reagiert, nicht die gebotene Geschwindigkeit beachtet, am Gefahrenbereich nicht anhält oder mit zu hoch ausgefahrenem Mast durch ein Tor fahren will. FAS-Systeme sind insbesondere hilfreich zur Sicherung von Tordurchfahrten, Kreuzungen, Fußgängerüberwegen, Tempobeschränkungen im Innen- und Außenbereich sowie Durchfahrten an Sprinkler-, Elektro- oder Gasleitungen.

Unabhängig davon, ob die Systeme willensabhängig oder auch selbsttätig wirkend rechtzeitig in die Steuerung des Fahrzeugs eingreifen, muss jedes dieser Systeme mit der Fahrzeugsteuerung verbunden sein. Dies erfordert nicht nur einen sehr hohen Montageaufwand bei der Aus- oder Umrüstung eines Flurförderzeuges, sondern auch die Platzierung der Systeme wird mit zunehmender Anzahl am Flurförderzeug erschwert.

Aufgabe der Erfindung ist es, die Nachteile des Standes der Technik zumindest zu mildern oder sogar zu beseitigen. Diese Aufgabe wird durch die Merkmale des Patentanspruches 1 gelöst. Optionale bzw. vorteilhafte Weiterbildungen der Erfindung sind Gegenstand der Patentansprüche 2 bis 11.

Gemäß der Erfindung ist ein Flurförderzeug nach Anspruch 1 vorgesehen.

Erfindungsgemäss ist die Vielzahl von Fahrerassistenzsystemen mittels nur eines Anschlusses mit einer Fahrzeugsteuerung des Flurförderzeugges elektrisch verbindbar.

Nach einer Weiterbildung der Erfindung ist das Gehäuse aus einer Bodenplatte und einem Deckel, der lösbar mit der Bodenplatte koppelbar ist, gebildet.

Vorzugsweise ist der Anschluss an einer dem Innenraum abgewandten Seite der Bodenplatte angeordnet.

Weiterhin bevorzugt sind der Deckel und die Bodenklappe mittels einer Klemmeinrichtung miteinander koppelbar.

Nach einer bevorzugten Ausführungsform der Erfindung ist das Gehäuse mittels der Klemmeinrichtung an einem Dach des Flurförderzeuges befestigt.

Bevorzugt ist der Deckel zumindest abschnittsweise aus einem Material gebildet, das gegenüber Infrarotstrahlung durchlässig ist.

Erfindungsgemäss ist der Innenraum des Gehäuses wahlweise beheizbar oder kühlbar.

Nach einer besonders vorteilhaften Ausgestaltung der Erfindung ist das Gehäuse wasserdicht verschließbar.

Besonders bevorzugt ist die Vielzahl von Fahrerassistenzsystemen potentialfrei in dem Gehäuse gelagert.

Vorzugsweise weist die Bodenplatte zwei in einem Abstand zueinander angeordnete erste und zweite Böden auf, wobei die Vielzahl von Fahrerassistenzsystemen auf dem ersten Böden montiert sind, und wobei der Abstand zwischen dem ersten und dem zweiten Boden so gewählt ist, dass Anschlussleitungen von der Vielzahl von Fahrerassistenzsystemen zwischen den beiden Böden zu dem Anschluss geführt werden können.

Nach einer weiteren bevorzugten Ausführungsform der Erfindung weist der Deckel eine Farbe auf, die kennzeichnend für die Anzahl und/oder die Art der in dem Gehäuse untergebrachten Fahrerassistenzsysteme ist oder eine Gruppe von typgleichen oder einsatzgleichen Flurförderzeugen anzeigt.

Weiterhin besonders bevorzugt ist die Vielzahl von Fahrerassistenzsystemen ausgewählt aus der Gruppe umfassend RFID gesteuerte Zutrittskontrollsysteme, Rückraumwarnsysteme, Geschwindigkeitsregelungssysteme, Distanzkontrollsysteme, Kollisionsschutzsysteme, Ortungssysteme, Navigationssysteme und Schocksensorsysteme.

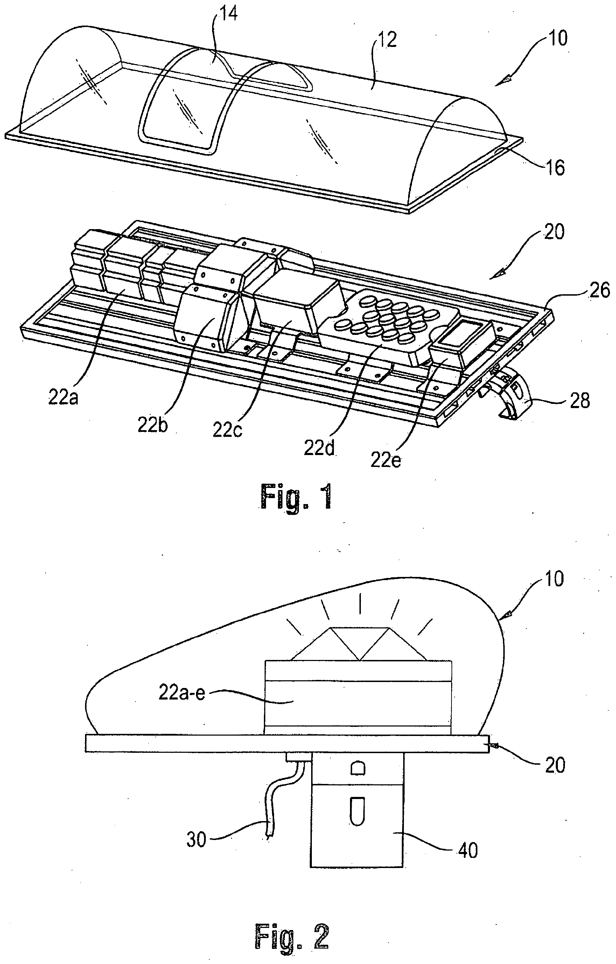

Die Erfindung wird im Folgenden exemplarisch anhand der Fig. 1 und der Fig. 2 beschrieben. Von den Figuren zeigen:
Fig. 1 eine Explosionsansicht eines erfindungsgemäßen Gehäuses für die Unterbringung einer Vielzahl von FAS-Systemen; und
Fig. 2 eine Querschnittansicht des Gehäuses der Fig. 1 in stark vereinfachter Form.

Das erfindungsgemäße Gehäuse ist in einer Vielzahl unterschiedlicher Flurförderzeuge einsetzbar. Diese Flurförderzeuge, unabhängig davon, ob sie von einer Person gelenkt werden oder führerlos sind, werden insbesondere im logistischen Bereich verwendet und können Stapler, Hubwagen, Regalbediengeräte bzw. Regalroboter, Elektrocars, Kehrmaschinen, etc. sein.

In Fig. 1 ist ein Gehäuse gezeigt, das aus einer Bodenplatte 20 und einem Deckel 10 gebildet ist. Die Bodenplatte 20 weist einen allseitig sich um den Umfang der Bodenplatte 20 erstreckenden Flansch 26 auf. Ebenso weist der Deckel 10 einen allseitig sich um den Umfang des Deckels 10 erstreckenden Flansch 16 auf. Der Grundriss der Bodenplatte 20 und des Deckels 10 ist vorzugsweise rechteckig, kann aber auch jede andere beliebige Form besitzen. Die Oberseite 12 des Deckels 10 ist vorzugsweise konvex gekrümmt und hat einen Radius von etwa der halben Breite der Bodenplatte 20.

Die Bodenplatte 20 kann auch eine Sandwichbauweise aufweisen. Mit anderen Worten, die Bodenplatte 20 weist in diesem Fall zwei in einem Abstand und parallel zueinander angeordnete Bodenplatten oder Böden auf, wobei der Abstand so gewählt ist, dass Anschlussleitungen zwischen den beiden Böden hindurchgeführt werden können.

Die Bodenplatte 20 und der Deckel 10 können mittels einer Klemmeinrichtung 28, in dem gezeigten Fall mittels zweier Klemmbügel (nur ein Klemmbügel ist in Fig. 1 dargestellt), lösbar miteinander verbunden werden. Mittels der gleichen Klemmbügel kann das Gehäuse beispielsweise im hinteren Bereich des Daches eines Flurförderzeuges mit dem Flurförderzeug lösbar verbunden werden. Im verbundenen Zustand liegt der Flansch 26 der Bodenplatte 20 auf dem Flansch 16 des Deckels 10 auf.

Auf der Innenseite der Bodenplatte 20 ist eine Vielzahl von FAS-Systemen 22a, 22b, 22c, 22d, 22e stationär montiert. Die FAS-Systeme 22a, 22b, 22c, 22d, 22e können dabei auf einer Leiterplatine oder einer anderen dafür geeigneten Montageplatte lösbar oder permanent befestigt sein. Die Befestigung erfolgt potenzialfrei, das heißt die FAS-Systeme 22a, 22b, 22c, 22d, 22e sind entweder gegenüber dem Gehäuse oder dem Flurförderzeug, auf bzw. an dem das Gehäuse montiert ist, elektrisch isoliert.

Das Gehäuse ist klimatisiert, d.h. es kann wahlweise gekühlt oder beheizt werden, so dass die von den FAS-Systemen erzeugte Wärme rasch abgeführt und es nicht zu einer Überhitzung kommen kann. Beim Einsatz des Flurförderzeuges in einem Kühlhaus oder im Outdoorbereich im Winter kann der Innenbereich des Gehäuses beheizt werden, wodurch zu geringe Temperaturen innerhalb des Gehäuses vermieden werden können. Darüber hinaus ist das Gehäuse vorzugsweise wasserdicht verschließbar. Die Wasserdichtheit gewährleistet den Außenbetrieb des Fahrzeuges, auf oder an dem das Gehäuse montiert ist. Die Kühlung bzw. Beheizung des Innenraums des Gehäuses kann über im Innenraum installierte Kühl- und Heizaggregate mit Luftfeuchteregelung erfolgen. Ebenso ist es denkbar, das gekühlte oder beheizte Luft, das von einem außerhalb des Gehäuses befindlichen Aggregat stammt, in den Innenraum des Gehäuses zugeführt wird.

Sowohl die Bodenplatte 20 und der Deckel 10 als auch der Halter 40 (Fig. 2) sind vorzugsweise aus Kunststoff oder aus einem rostfreien Material hergestellt. Damit sämtliche FAS-Systeme fehlerfrei arbeiten können (unter diesen Systemen befinden sich auch solche, die Objekte mittels Infrarotstrahlung erfassen), ist der Deckel 10 vorzugsweise und besonders bevorzugt abschnittsweise aus einem IR-durchlässigen Material gebildet. In Fig. 1 weist der Deckel 10 einen Abschnitt 14 auf, der IR durchlässig ist, damit das darunter sich befindliche FAS-System 22b fehlerfrei arbeiten kann. Sollte eines der FAS-Systeme bei optischen Wellenlängen arbeiten, ist der Deckel zumindest bereichsweise aus einem lichtdurchlässigen Material gebildet. Gleichzeitig ist das Material des Deckels gegenüber UV-Strahlung beständig.

Wie in Fig. 2 zu sehen ist, können sämtliche FAS-Systeme 22a, 22b, 22c, 22d, 22e vorzugsweise über lediglich einen Schnittstellenanschluss 30 mit der Fahrzeugsteuerung elektrisch verbunden werden. Alternativ kann das Gehäuse auch zwei oder mehr Anschlüsse aufweisen, sollte die Anzahl der in dem Gehäuse untergebrachten FAS-Systeme die Kapazität des einen Anschlusses übersteigen. Der Dialog, die Einbindung und die Verknüpfung der FAS-Systeme mit der Fahrzeugsteuerung erfolgt lediglich über den einen am Gehäuse vorgesehenen Anschluss. Dies bringt erhebliche Vorteile im Hinblick auf die Montage der jeweiligen Systeme am Flurförderzeug und deren elektrische oder drahtlose Verbindung mit der Fahrzeugsteuerung.

Denkbar ist auch, die FAS-Systeme 22a, 22b, 22c, 22d, 22e über den Anschluss 30 mittels Bluetooth-Technologie mit der Fahrzeugsteuerung zu verbinden. Zu diesem Zweck müsste der in Fig. 2 gezeigte Anschluss 30 ein Bluetooth Anschluss sein. Zusätzlich ist es vorzugsweise möglich, die FAS-Systeme 22a, 22b, 22c, 22d, 22e über den Anschluss 30 mit einem im Führerhaus oder zumindest im Bereich der Lenkung des Flurförderzeuges angeordneten Display sowie Eingabeterminal zu verbinden. Dadurch kann der Führer des Flurförderzeuges die FAS-Systeme 22a, 22b, 22c, 22d, 22e im Bedarfsfall aktivieren oder deaktivieren, und hat stets einen Überblick über die von den FAS-Systemen 22a, 22b, 22c, 22d, 22e erfassten Gefahrensituationen und kann diese notfalls übersteuern.

Darüber hinaus kann bei geschlossenem Klemmbügel 28 dem Führer des Flurförderzeuges am Display die Betriebsbereitschaft sämtlicher FAS-Systeme 22a, 22b, 22c, 22d, 22e angezeigt werden. Zu diesem Zweck gibt der Klemmbügel 28 über den Anschluss 30 ein Kontaktsignal an das Display und vorzugsweise an die Fahrzeugsteuerung ab, wenn der Deckel 10 und die Bodenplatte 20 ordnungsgemäß geschlossen sind.

Wie der Fig. 2 zu entnehmen ist, ist der Anschluss 30 an einer Außenseite der Bodenplatte 20 angeordnet und zugänglich. Mit Hilfe eines standardisierten Schnittstellensteckers, der von außen in den Anschluss gesteckt wird, können die mit dem Anschluss elektrisch verbundenen FAS-Systeme 22a, 22b, 22c, 22d, 22e mit der Fahrzeugsteuerung und vorzugsweise auch mit dem voranstehend erwähnten Display und Eingabeterminal elektrisch verbunden werden.

Die potenzialfreie Montage der FAS-Systeme 22a, 22b, 22c, 22d, 22e kann gemäß Fig. 2 über einen aus einem elektrisch nicht leitfähigen Material hergestellten Halter 40 sichergestellt werden. Alternativ kann der Halter 40 aus Metall sein, und die Montageplatte bzw. Leiterplatine 20 kann aus einem elektrisch isolierenden Material gebildet sein. Die FAS-Systeme 22a, 22b, 22c, 22d, 22e sind immer voneinander elektrisch isoliert.

Vorzugsweise kann das Gehäuse in Form eines aerodynamisch geformten Spoilers ausgebildet sein, der im hinteren Bereich des Daches eines Flurförderzeuges mittels der Klemmeinrichtung 28 montierte wird.

Die Klimatisierung bzw. Kühlung/Heizung kann vorzugsweise über den isolierenden Halter 40 erfolgen, der gleichzeitig die von den FAS-Systemen 22a, 22b, 22c, 22d, 22e abgegebene Wärme nach außen ableitet. Der Halter 40 agiert somit als wärmedissipierendes Element.

Der Deckel 10 ist vorzugsweise ganzheitlich gefärbt oder weist eine spezielle Farbkennung auf. Die Färbung bzw. die Farbkennung kann beispielsweise auf die Anzahl der in dem Gehäuse untergebrachten FAS-Systeme 22a, 22b, 22c, 22d, 22e oder aber auch auf deren Art (willensabhängige oder auch selbsttätig wirkende FAS-Systeme) hinweisen. Dies erleichtert die Auswahl des passenden Gehäuses für das jeweilige Flurförderzeug und dessen Einsatzzweck. Darüber hinaus kann die Farbe oder Farbkennung auch auf den Typ und/oder den Einsatzzweck bzw. die betriebliche Organisation der Betriebsstätte, in der das Flurförderzeug eingesetzt wird, hinweisen.

Die Montage des Gehäuses mittels eines oder mehrerer Klemmbügelverschlüsse 28 ermöglicht eine schnelle Demontage des Deckels 10, oder alternativ des gesamten Gehäuses vom Dach des Flurförderzeuges. Dieser schnelle Auf- und Abbau, der werkzeuglos erfolgt, sorgt für kostenminimierte Instandsetzungen, und der Austausch etwaig fehlerhaft arbeitender FAS-Systeme 22a, 22b, 22c, 22d, 22e kann mühelos und schnell vollzogen werden. Des Weiteren kann das Gehäuse schnell auf einem anderen Fahrzeug, das beispielsweise in einer anderen Betriebsstätte normalerweise betrieben wird, montiert werden, oder gar auf einem Leihfahrzeug. Es müssen somit nicht zu jedem Zeitpunkt sämtliche Flurförderzeuge mit kostenintensiven FAS-Systemen 22a, 22b, 22c, 22d, 22e ausgestattet sein, da das Gehäuse samt seinem Inhalt mühelos und innerhalb kürzester Zeit von einem Flurförderzeug abgebaut und auf einem anderen Flurförderzeug montiert werden kann.

Beispiele für die innerhalb des Gehäuses untergebrachten FAS-Systeme 22a, 22b, 22c, 22d, 22e sind RFID-gesteuerte Zutrittskontrollsysteme, Rückraumwarnsysteme, Geschwindigkeitsregelungssysteme, Distanzkontrollsysteme, Kollisionsschutzsysteme, Ortungssysteme, Navigationssysteme und Schocksensorsysteme.

Mit Hilfe von Rückraumwarnsystemen wird der Rückraum des Flurförderzeuges bei jeder Rückwärtsfahrt dreidimensional überwacht. Sobald ein Gegenstand im Überwachungsbereich erkannt wird, erfolgt eine akustische und optische Warnung an den Fahrzeugführer und/oder gleichzeitig ein Eingriff in die Fahrzeugsteuerung bis hin zu einem vollständigen Stopp des Flurförderzeuges vor dem Hindernis.

Ein weiteres Kollisionsschutzsystem erkennt, ob sich das Flurförderzeug innerhalb einer Überdachung oder unter freiem Himmel befindet. Je nach Fahrzeugposition wird die Geschwindigkeit des Flurförderzeuges automatisch begrenzt.

Einmündungen von schmalen Fußgängerwegen auf einen Hauptverkehrsweg stellen eine Gefahrquelle für Fußgänger dar, die achtlos auf den Verkehrsweg und damit möglicherweise vor ein vorbeifahrendes Flurförderzeug treten können. Hinweisende Maßnahmen wie Schilder oder Spiegel bleiben meist ohne große Wirkung. Durch die sog. Fußgänger-Zugangssperre wird eine Barriere aktiviert, damit im Moment des Vorbeifahrens der Fußgänger nicht achtlos auf den Verkehrsweg vor das Flurförderzeug treten kann. Die Sperre wird automatisch aktiviert, wenn das Flurförderzeug auf den Zugang zugefahren kommt und deaktiviert, wenn es am Zugang vorbei ist.

Bei Tordurchfahrten können durch hohe Geschwindigkeit, zu hohe Lasten oder zu hoch ausgefahrene Hubmasten große Schäden an Tore und Flurförderzeuge verursacht werden. Mit einem speziell für diesen Zweck ausgebildeten Kollisionssensor wird diese Gefahrensituation wirkungsvoll und sicher entschärft.

Beim innerbetrieblichen Verkehrsfluss bergen Kreuzungsbereiche ein besonderes Gefahrenpotenzial, da sie von Fußgängern und Flurförderzeugen gleichzeitig genutzt werden. Wie im normalen Straßenverkehr spielt die Geschwindigkeit, mit der die Kreuzung überquert wird, eine wesentliche Rolle. Durch die Kreuzungssicherung wird ein Kreuzungsbereich sicherer und gefahrloser. Spezielle Sensoren steuern den Verkehrsfluss, ohne dass der Fahrer darauf Einfluss nehmen kann oder muss. Ein mit FAS-Systemen ausgestattetes Flurförderzeug steuert auch diverse Aktivwarnungen (Blitzleuchten, blinkende Verkehrsschilder, usw.) an, und zwar lange bevor das Fahrzeug die Gefahrenstelle erreicht und eine potentielle Gefahr entstehen könnte.

Sämtliche solcher FAS-Systeme können mit Hilfe der Erfindung an im Logistik- oder Werkshallenbereich eingesetzten Fahrzeugen bzw. Flurförderzeugen, egal ob führerlos oder nicht, schnell und damit kostengünstig und ohne spezielle Montagekenntnisse werkzeuglos montiert und demontiert werden.

## Patentansprüche

1. Flurförderzeug, umfassend ein Gehäuse (10, 20) das einen Innenraum festlegt, in dem eine Vielzahl von sicherheitsrelevanten Fahrerassistenzsystemen (22a, 22b, 22c, 22d, 22e) untergebracht sind, wobei das Gehäuse (10, 20) einen Anschluss (30) aufweist und wobei die Vielzahl von Fahrerassistenzsystemen (22a, 22b, 22c, 22d, 22e) mittels nur dem Anschluss (30) mit einer Fahrzeugsteuerung des Flurförderzeuges elektrisch verbindbar ist und wobei der Innenraum des Gehäuses (10, 20) wahlweise beheizbar oder kühlbar ist.

2. Flurförderzeug nach Anspruch 1, wobei das Gehäuse (10, 20) aus einer Bodenplatte (20) und einem Deckel (10), der lösbar mit der Bodenplatte (20) koppelbar ist, gebildet ist.

3. Flurförderzeug nach einem der Ansprüche 1 bis 2, wobei der Anschluss (30) an einer dem Innenraum abgewandeten Seite der Bodenplatte (20) angeordnet ist.

4. Flurförderzeug nach einem der Ansprüche 2 oder 3, wobei der Deckel (10) und die Bodenplatte (20) mittels einer Klemmeinrichtung (28) miteinander koppelbar sind

5. Flurförderzeug nach Anspruch 4, wobei mittels der Klemmeinrichtung (28) das Gehäuse (10, 20) an einem Dach des Flurförderzeuges befestigt ist.

6. Flurförderzeug nach einem der Ansprüche 2 bis 5, wobei der Deckel (10) zumindest abschnittsweise aus einem Material gebildet ist, das gegenüber Infrarotstrahlung durchlässig ist.

7. Flurförderzeug nach einem der vorhergehenden Ansprüche, wobei der Innenraum des Gehäuses (10, 20) wasserdicht verschließbar ist.

8. Flurförderzeug nach einem der vorhergehenden Ansprüche, wobei die Vielzahl von Fahrerassistenzsystemen (22a, 22b, 22c, 22d, 22e) potentialfrei in dem Gehäuse (10, 20) gelagert ist.

9. Flurförderzeug nach einem der Ansprüche 2 bis 8, wobei die Bodenplatte (20) zwei in einem Abstand parallel zueinander angeordnete erste und zweite Böden aufweist, und wobei die Vielzahl von Fahrerassistenzsystemen (22a, 22b, 22c, 22d, 22e) auf dem ersten Boden montiert sind, und wobei der Abstand zwischen dem ersten und dem zweiten Boden so gewählt ist, dass Anschlussleitungen von der Vielzahl von Fahrerassistenzsystemen (22a, 22b, 22c, 22d, 22e) zwischen den beiden Böden zu dem Anschluss (30) geführt werden können.

10. Flurförderzeug nach einem der Ansprüche 2 bis 9, wobei der Deckel (10) eine Farbe aufweist, die kennzeichnend für die Anzahl und/oder die Art der in dem Gehäuse (10, 20) untergebrachten Fahrerassistenzsysteme (22a, 22b, 22c, 22d, 22e) ist oder eine Gruppe von typgleichen oder einsatzgleichen Fahrzeugen anzeigt.

11. Flurförderzeug nach einem der vorhergehenden Ansprüche, wobei die Vielzahl von Fahrerassistenzsystemen (22a, 22b, 22c, 22d, 22e) ausgewählt ist aus der Gruppe umfassend RFID gesteuerte Zutrittskontrollsysteme, Rückraumwarnsysteme, Geschwindigkeitsregelungssysteme, Distanzkontrollsysteme, Kollisionsschutzsysteme, Ortungssysteme, Navigationssysteme und Schocksensorsysteme.

## Claims

1. An industrial truck, comprising a housing (10, 20) which defines an interior space in which a plurality of safety-relevant driver assistance systems (22a, 22b, 22c, 22d, 22e) are accommodated, wherein the housing (10, 20) has a connection (30) and wherein the plurality of driver assistance systems (22a, 22b, 22c, 22d, 22e) is able to be connected electrically by means only of the connection (30) with a vehicle control system of the industrial truck, and wherein the interior space of the housing (10, 20) is optionally able to be heated or cooled.

2. The industrial truck according to Claim 1, wherein the housing (10, 20) is formed from a base plate (20) and a cover (10), which is able to be coupled detachably with the base plate (20).

3. The industrial truck according to one of Claims 1 to 2, wherein the connection (30) is arranged on a side of the base plate (20) facing away from the interior space.

4. The industrial truck according to one of Claims 2 or 3, wherein the cover (10) and the base plate (20) are able to be coupled with one another by means of a clamping arrangement (28).

5. The industrial truck according to Claim 4, wherein the housing (10, 20) is fastened to a roof of the industrial truck by means of the clamping arrangement (28).

6. The industrial truck according to one of Claims 2 to 5, wherein the cover (10) is formed at least in sections from a material which is permeable with respect to infrared radiation.

7. The industrial truck according to one of the preceding claims, wherein the interior space of the housing (10, 20) is able to be closed in a watertight manner.

8. The industrial truck according to one of the preceding claims, wherein the plurality of driver assistance systems (22a, 22b, 22c, 22d, 22e) is mounted in a potential-free manner in the housing (10, 20).

9. The industrial truck according to one of Claims 2 to 8, wherein the base plate (20) has two, first and second, bases arranged at a distance parallel with respect to one another, and wherein the plurality of driver assistance systems (22a, 22b, 22c, 22d, 22e) are mounted on the first base, and wherein the distance between the first and the second base is selected so that connection lines can be directed from the plurality of driver assistance systems (22a, 22b, 22c, 22d, 22e) between the two bases to the connection (30).

10. The industrial truck according to one of Claims 2 to 9, wherein the cover (10) has a colour which is characteristic for the number and/or the type of the driver assistance systems (22a, 22b, 22c, 22d, 22e) accommodated in the housing (10, 20) or indicates a group of vehicles of the same type or of the same service.

11. The industrial truck according to one of the preceding claims, wherein the plurality of driver assistance systems (22a, 22b, 22c, 22d, 22e) is selected from the group comprising RFID controlled access control systems, rear space warning systems, speed regulation systems, distance control systems, collision protection systems, locating systems, navigation systems and shock sensor systems.

## Revendications

1. Chariot de manutention comprenant un carter (10, 20) définissant un compartiment intérieur où est logée une pluralité de systèmes d'assistance au conducteur (22a, 22b, 22c, 22d, 22e) relatifs à la sécurisé, le carter (10, 20) présentant une connexion (30) et la pluralité de systèmes d'assistance au conducteur (22a, 22b, 22c, 22d, 22e) ne pouvant être électriquement raccordés qu'au moyen de la connexion (30) à une commande de véhicule du chariot de manutention, et le compartiment intérieur du carter (10, 20) pouvant être sélectivement chauffé ou refroidi.

2. Chariot de manutention selon la revendication 1, où le carter (10, 20) est constitué d'une plaque de fond (20) et d'un couvercle (10) pouvant être accouplé de manière amovible à la plaque de fond (20).

3. Chariot de manutention selon la revendication 1 ou la revendication 2, où la connexion (30) est disposée sur une face de la plaque de fond (20) distante du compartiment intérieur.

4. Chariot de manutention selon la revendication 2 ou la revendication 3, où le couvercle (10) et la plaque de fond (20) peuvent être accouplés l'un à l'autre au moyen d'un dispositif de fixation (28).

5. Chariot de manutention selon la revendication 4, où le carter (10, 20) est fixé sur un toit du chariot de manutention au moyen du dispositif de fixation (28).

6. Chariot de manutention selon l'une des revendications 2 à 5, où le couvercle (10) est au moins partiellement constitué d'un matériau perméable au rayonnement infrarouge.

7. Chariot de manutention selon l'une des revendications précédentes, où le compartiment intérieur du carter (10, 20) peut être fermé de manière étanche à l'eau.

8. Chariot de manutention selon l'une des revendications précédentes, où la pluralité de systèmes d'assistance au conducteur (22a, 22b, 22c, 22d, 22e) est montée hors potentiel dans le carter (10, 20).

9. Chariot de manutention selon l'une des revendications 2 à 8, où la plaque de fond (20) comporte deux fonds, un premier et un deuxième fond parallèles en étant espacés l'un de l'autre, où la pluralité de systèmes d'assistance au conducteur (22a, 22b, 22c, 22d, 22e) est montée sur le premier fond, et où l'espacement entre le premier et le deuxième fonds est sélectionné de telle manière que des conduites de raccordement de la pluralité de systèmes d'assistance au conducteur (22a, 22b, 22c, 22d, 22e) peuvent être guidées entre les deux fonds vers la connexion (30).

10. Chariot de manutention selon l'une des revendications 2 à 9, où le couvercle (10) a une couleur caractéristique pour le nombre et/ou le type des systèmes d'assistance au conducteur (22a, 22b, 22c, 22d, 22e) logés dans le carter (10, 20), ou signale un groupe de véhicules de même type ou de même destination.

11. Chariot de manutention selon l'une des revendications précédentes, où la pluralité de systèmes d'assistance au conducteur (22a, 22b, 22c, 22d, 22e) est sélectionnée dans le groupe comprenant des systèmes de contrôle d'accès à commande RFID, des systèmes d'assistance au recul, des systèmes de régulation de vitesse, des systèmes de contrôle de distance, des systèmes de protection contre les collisions, des systèmes de localisation, des systèmes de navigation et des systèmes de capteurs de choc.
